Europäisches Patentamt

(19) European Patent Office

Office européen des brevets

(11) Publication number: **0 009 663**
**B1**

(12) **EUROPEAN PATENT SPECIFICATION**

(45) Date of publication of patent specification: 08.06.83

(51) Int. Cl.³: **G 01 P 3/42, G 11 B 5/55**

(21) Application number: 79103350.9

(22) Date of filing: 07.09.79

(54) Electronic tachometer circuit.

(30) Priority: 29.09.78 US 947278

(43) Date of publication of application:
16.04.80 Bulletin 80/8

(45) Publication of the grant of the patent:
08.06.83 Bulletin 83/23

(84) Designated Contracting States:
DE FR GB

(56) References cited:
US - A - 3 568 059
US - A - 3 820 712
US - A - 3 839 665
US - A - 3 883 894
US - A - 3 936 876

IBM TECHNICAL DISCLOSURE BULLETIN, vol.
17, no. 1 (1974.06) New York US R. D.
Commander et al.: "Velocity Signal Generator",
pages 237—238

(73) Proprietor: International Business Machines
Corporation
Armonk, N.Y. 10504 (US)

(72) Inventor: Bradley, Edward Franklin
6674 Charter Oak Place
San Jose, CA 95120 (US)
Inventor: Mueller, Francis Edward
1269 Peralta Drive
San Jose, CA 95120 (US)

(74) Representative: Petersen, Richard Courtenay
IBM United Kingdom Patent Operations Hursley
Park
Winchester Hants. SO21 2JN (GB)

(56) References cited:
IEEE TRANSACTIONS ON MAGNETICS, vol.
Mag-11, no. 5 (1975.09) New York US R. K.
OSWALD "An-Electronic Tachometer for Disk
File Motion Control" pages 1245—1246
IBM TECHNICAL DISCLOSURE BULLETIN vol.
16, no. 4 (1973.09) New York US R. S. PALMER
et al.: "Optical Tachometer with Electronic
Switch Circuitry", pages 1214—1217

Courier Press, Leamington Spa, England.

Electronic tachometer circuit

This invention relates to electronic tachometer circuits, such as are used, for example, to provide accurate velocity information in respect of a head in a magnetic disk drive system.

Disk drive systems that employ accessing heads require that a selected read/write head be transported to a selected data track in a minimum amount of time. To achieve this objective, it is necessary to obtain accurate velocity information so that the velocity of the head actuator may be properly controlled during a SEEK operation. For this purpose, electronic tachometer circuits, such as disclosed in documents US—A—3,820,712 and US—A—3,936,876 have been employed. However, as track density increases and wider frequency range is encountered, requirements for accuracy of velocity sensing become more stringent.

In some prior art electronic tachometer circuits, the position error signal is sensed and differentiated over a given displacement to provide a first velocity signal indicative of the speed of the accessing mechanism, which may be a voice coil motor, for example. Thus, such a circuit included a position error signal channel having means to derive position error signals having discontinuous portions and differentiating means coupled to the position error signal deriving means to generate velocity signal components. The current in the voice coil motor is detected and integrated over that displacement to provide a second velocity signal that is combined with the first velocity signal to compensate for the discontinuities and nonlinear portions of the position error signal. Thus, the circuit included means to provide a fill-in signal during the discontinuous portions of the position error signals, and means to combine the velocity signal components from the position error signal channel with the fill-in signal. The combined velocity signal is continuously measured and the accessing device is accelerated or decelerated so that the actual velocity approaches a predetermined ideal velocity.

Some prior art electronic tachometer circuits employ differentiators with high bandwidths to recover from the position error signal discontinuities. However, systems using differentiators with high bandwidths tend to suffer from undue noise signal and non-linear signal output at low velocities, among other things. One method of eliminating velocity noise error is to band limit the differentiator. However, this approach produces velocity errors at high velocities and accelerations, and excessive phase shift in the velocity signal.

The invention seeks to provide an improved electronic tachometer circuit that generates an accurate continuous velocity signal.

It also seeks to maintain a linear output velocity signal at low velocities.

It further seeks to eliminate effectively the effects of input signal noise while maintaining wide-band velocity signal accuracy.

According to the invention, an electronic tachometer circuit for sensing velocity of a current driven actuator means, comprises a position error signal channel having means to derive position error signals having discontinuous portions, differentiating means coupled to the position error signal deriving means to generate velocity signal components, means to provide a fill-in signal during the discontinuous portions of the position error signals, and means to combine the velocity signal components from the position error signal channel with the fill-in signal, is characterised in that the differentiating means is a low bandwidth differentiating means and that the fill-in signal is applied directly to the differentiating means.

In one preferred embodiment, the fill-in signal is derived from a current signal channel having means to derive current signals from the actuator means and to generate velocity signal components for application to the differentiating means.

In an alternative embodiment, the position error signal channel includes a primary network and a quadrature network for processing primary and quadrature position error signals, signals derived from one of the networks being used to provide fill-in signals during discontinuous portions of signals derived from the other network.

The scope of the invention is defined by the appended claims; and how it can be carried into effect is hereinafter particularly described with reference to the accompanying drawings, in which:—

Figure 1 is a representational block diagram of part of an electronic tachometer circuit according to the invention;

Figure 2 is a circuit diagram, in block and partly in schematic form, of an electronic tachometer circuit in accordance with this invention to be read in conjunction with Fig. 1;

Figure 3 is a block diagram of the current channel of Fig. 2;

Figure 4 is a block and schematic circuit diagram of the position channel of Fig. 2;

Figure 5 is a block and schematic diagram of the track and fill circuit of Fig. 2;

Figure 6 shows a series of waveforms of signals in the circuit of Fig. 2 to aid in the explanation of the position channel timing;

Figure 7 is a block and a schematic circuit diagram of part of an alternative embodiment of electronic tachometer circuit according to the invention to be read in conjunction with Fig. 1;

Figure 8 is a schematic diagram of another part of the alternative embodiment; and

Figure 9 shows a series of waveforms of signals in the alternative embodiment of circuit to aid in the explanation of position channel timing in a quadrature system.

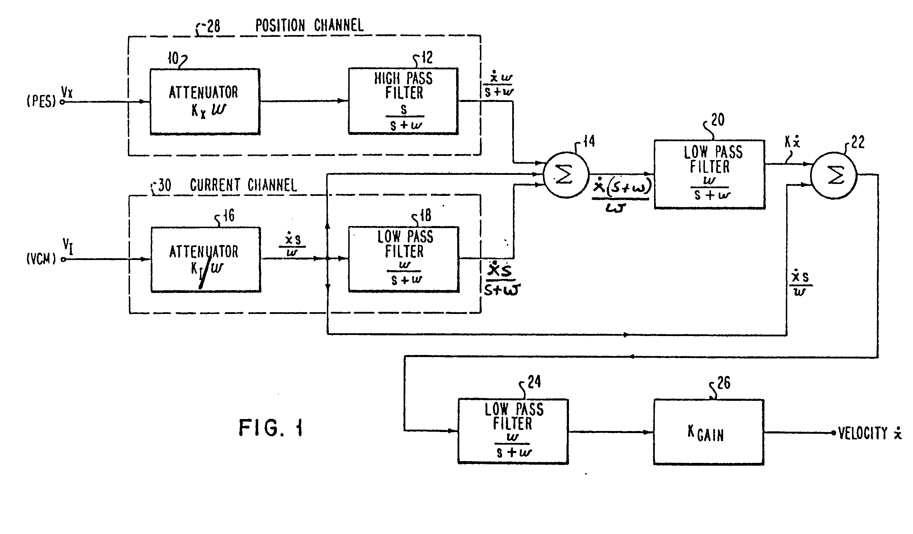

An electronic tachometer circuit (Fig. 1) is used to derive a signal indicative of the velocity of an electric current driven actuator from signals indicative of the position of the actuator and the magnitude of the current supplied. In a particular exemplary application, the actuator is a voice coil motor used as the access mechanism to transport a magnetic transducer head across recorded tracks of a rotating magnetic disk in a disk drive. The signal indicative of the position of the actuator is derived as a position error signal (PES) being a voltage signal $V_x$ indicative of the distance between the present position of the head and the intended final position thereof. The signal indicative of the magnitude of the current supplied is derived from the voice coil motor (VCM) as a voltage $V_I$ proportional to the current in the coil of the motor.

The PES voltage $V_x$, derived from sensing the movement of the head across the tracks, is applied to a position channel 28 comprising an attenuator stage 10 and a high pass filter 12. The attenuator stage 10 is designated $K_x w$, where $K_x$ is a constant representing the position channel attenuation factor and w is the filter corner frequency. The attenuated signal is fed to the high pass filter 12, labelled

$$\frac{s}{s+w}$$

where s is d/dt, the differentiation function. The differentiated signal, noted as

$$\frac{\dot{x}W}{s+w}$$

is the signal, proportional to velocity, that is applied to a summing circuit 14. The position signal, from which the velocity signal is generated, contains broadband noise components, resulting from disk surface irregularities, among other things.

Concurrently the current of the voice coil actuator is sensed and a voltage $V_I$ representative of the current magnitude is applied to a current channel 30 comprising an attenuator stage 16 and a low pass filter 18. The attenuator stage 16 is designated as $K_I/w$ where $K_I$ is a constant representing the current channel attenuation factor. The current signal, which is proportional to the acceleration or deceleration of the voice coil, is passed through the low pass filter 18, illustrated as

$$\frac{w}{s+w}.$$

The low pass filter provides a —6db per octave rolloff thereby reducing signal noise components, the attenuated current magnitude signal

$$\frac{\dot{x}s}{w}$$

from the attenuator 16 and the filtered signal

$$\frac{\dot{x}s}{s+w}$$

from the filter 18 are applied to the summing circuit 14. The current signal derived from the servo motor is relatively free of high frequency noise, and provides an output signal from the current channel having minimal high frequency noise components.

The output signal from the summing circuit 14, which has position and current signal components, is passed through a second low pass filter 20 to a second summing circuit 22, which also receives the attenuated current magnitude signal from the attenuator stage 16. The output signal from the summing circuit 22 is directed to a third low pass filter 24, and then to gain set amplifier 26. The resultant output velocity signal which has an effective noise reduction of —18db per octave by virtue of the three low pass filters, is used in the servo system of the disk drive to accelerate or decelerate the head during accessing. The movement and velocity of the head actuator is made to follow an idealized velocity curve which is generated by a curve generator, as is known in the art. In this manner, the radial movement of the magnetic head assembly relative to the rotating storage disk is precisely controlled.

The electronic tachometer circuit is capable of utilizing the optimum frequency range of the available signals by means of single pole high and low pass filters. Bandstop rolloff of —18db/octave is realized and significantly reduces resonant feedback effects and enhances servo system stability without limiting velocity signal bandwidth.

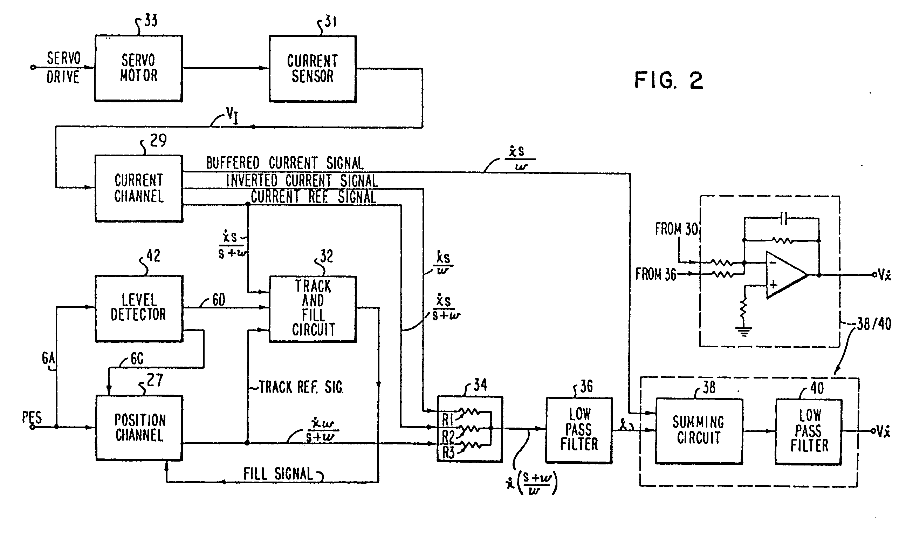

An implementation (Fig. 2) of an electronic tachometer circuit according to this invention, includes a position channel 27 and current channel 29 which provide velocity signals

$$\frac{\dot{x}w}{s+w} \quad \text{and} \quad \frac{\dot{x}s}{s+w}$$

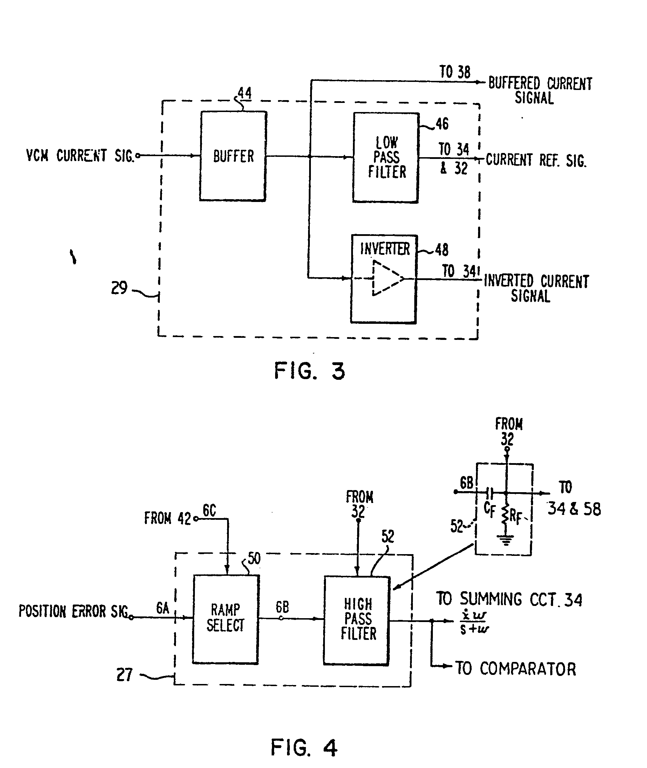

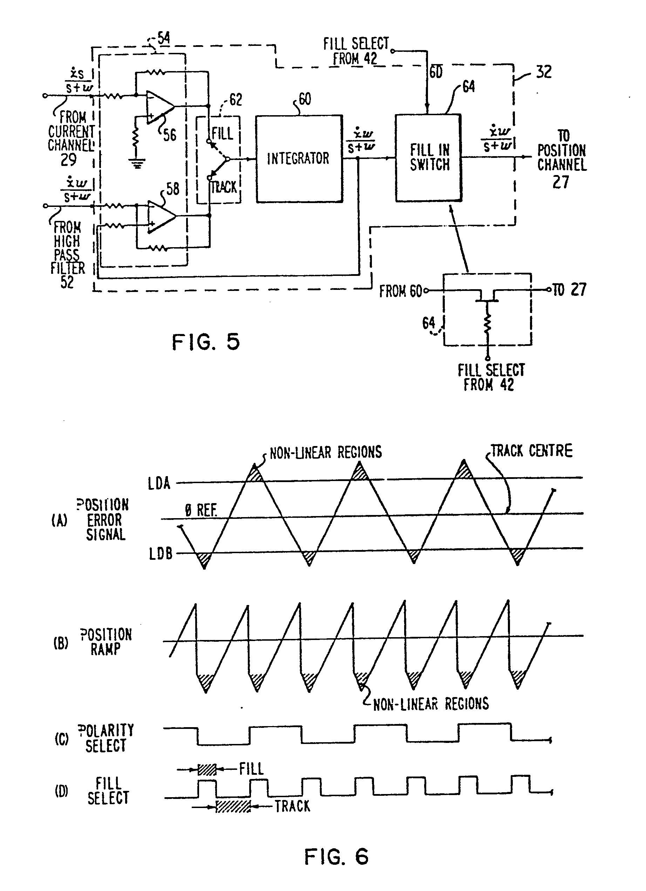

respectively and are similar to channels 28 and 30 (Fig. 1) respectively. The input signal $V_I$ to the current channel 29 is obtained from current sensor 31 that senses the current of the voice coil in the servo motor 33. The channel output velocity signals, which represent the differentiated PES and motor current signal respectively, are applied to a track and fill circuit 32, which will be described below with reference to Figs. 4, 5 and 6. In addition, a level detector or comparator 42 detects the position error signal at the maximum and minimum linear values, and senses when the position error signal (line A, Fig. 6) is entering the nonlinear region. The level detector 42 detects the linear amplitude and slope polarity of the position error signal, and provides a square wave fill select signal (line D, Fig. 6) to the track and fill circuit 32 and a polarity select signal (line C, Fig. 6) to position channel 27. The track and fill circuit 32 processes the velocity signal derived from the discontinuous nonlinear position error signal and the current reference signal derived from current magnitude to generate a continuous velocity fill-in signal. Velocity signal information is effectively filled in by the track and fill circuit 32 to span the nonlinear areas of the position error signal. The current reference signal is integrated in track and fill circuit 32 during nonlinear portions of the position error signal and is used to update the position error signal derived velocity signal in the nonlinear regions. The updated velocity signal from track and fill circuit 32 is in turn applied to position channel 27 to provide a continuous velocity signal from position channel 27 and to eliminate the effects of high pass filter circuit recovery from the velocity output signal.

The velocity signals derived from the current channel 29 and the updated continuous velocity signal from the position channel 27 are applied to a summing circuit 34 which includes connected resistors R1, R2 and R3. The signals at the summing circuit 34 are combined and passed through a low pass filter 36 to a summing circuit 38. The signal output from low pass filter 36 is directly proportional to velocity, i.e.=x. This signal is combined with the buffered current signal in summing circuit 38 and the combined signal is directed through a low pass filter 40 to produce a voltage signal representing the actual velocity of the voice coil actuator as it moves relative to the rotating disk surface. In effect, the velocity signal is developed from the position channel during low acceleration rates and from the current channel during higher acceleration rates. The velocity signal developed from the position channel additionally uses the fill-in signal derived from the current channel to provide continuous velocity signals from the position channel.

Included in the position channel 27 (Fig. 4) is a ramp select circuit 50, which includes an attenuator stage similar to attenuator stage 10 (Fig. 1), and a high pass filter 52, which acts as a limited bandwidth differentiator and includes a charging capacitor $C_f$ and resistor $R_f$.

Included in the current channel 29 (Fig. 3) is a buffer stage 44, which includes an attenuator stage similar to the attenuator stage 16 (Fig. 1), a low pass filter 46 and an inverter 48.

Each of the low pass filters 36, 40 and 46 provides 6 db/octave or a total 18 db/octave rolloff, without adding any delays in the operation of the circuit components. The multiple slope rolloff suppresses the high noise level which tends to be present in a broad bandwidth system. Additional summing and low pass filter elements similar to 38 and 40 may be added following filter 40 to increase the rolloff beyond 18db/octave for high resonance systems without adding delay or affecting accuracy. In this case, the buffered current signal

$$\left(\frac{\dot{x}s}{w}\right)$$

must be input to each additional summer similar to summing circuit 38 interconnection. In addition, the single section high pass filter 52 serves as a low bandwidth differentiator which operates over a limited range, thereby minimizing high frequency noise in the processed signal. By way of example, the high pass filter may operate over a range of 400 Hertz in a system which employs a 20 kiloHertz bandwidth.

The upper stage 44 of the current channel receives the current signal from the voice coil motor and provides a buffered current signal to the summing circuit 38. The buffer output is also passed through the low pass filter 46 to provide a current reference signal to the resistor R2 of the summing circuit 34 and to track and fill circuit 32. The buffer output is also directed to the inverter 48 to provide an inverted current signal to the resistor R1 of the summing circuit 34.

With reference to Figs. 4 and 6, the ramp select circuit 50 of the position channel receives the position error signal 6A and a polarity select signal 6C from the level detector 42. The circuit senses the slope polarity of the position error signal and generates a succession of positive going slopes. The ramp select circuit selects as its output the slope of the position error signal between the limits of its linear region which may be positive going or negative going to produce a succession of positive slopes. Each ramp represents the traversal of a servo track, and the zero crossings of the position error signal indicate that the track centre has been traversed.

The ramp select circuit thus generates a position ramp signal 6B that is a function of the position error signal. The position ramp signal 6B is directed through the high pass filter 52 which receives the fill signal output from the track and fill circuit 32. The differentiated position signal from the filter 52 is then fed to the summing circuit 34. However, the position error signal has nonlinear regions (Fig. 6) which occur in the area of the signal discontinuity produced when the servo head is between servo tracks. In order to have a continuous accurate velocity signal over the discontinuous non-linear regions, the track and fill circuit 32 operates to fill in the nonlinear regions so that the position velocity signal and fill signal form a continuous velocity signal. This is accomplished by clamping the output of the high pass filter 52 to the velocity signal level produced by track and fill circuit 32 during the nonlinear regions of the position error signal.

The track and fill circuit 32 (Fig. 5) includes a buffer network 54 consisting of buffer amplifier 56 and analog comparator 58.

The respective outputs of the amplifier 56 and comparator 58 are connected to opposite poles of a double-pole switch 62 whose output is coupled to an integrator 60. The output of the integrator is fed back to the comparator 58 and coupled to a fill in switch 64, whose output is connected to the high pass filter of position channel 27. The comparator 58 compares the output signal from the position channel 27 with the signal obtained from the integrator 60 when the double pole switch 62 is closed in the track mode. The comparator 58 and integrator 60 are coupled in a closed feedback loop.

If the signals are not equal then an error signal is generated. When an error signal exists, the integrator 60 is activated and integrates the error signal until the input signals to the comparator 58 are equal and there is no error signal. The switch 62 remains closed in the track position during the linear region of the position error signal and the integrator output signal is identical to and tracks the position velocity signal in the linear signal region.

However, when the level detector 42 senses the non-linear region of the position error signal, the fill select signal 6D operates the switch 62 to the fill mode, and the integrator 60 is disconnected from the comparator 58 and connected to the current channel buffer amplifier 56. The fill select signal 6D also operates the fill in switch 64 to connect the integrator output fill signal to the position channel 27. During the nonlinear position error signal regions, the fill-in signal is derived by integrating the current reference signal with initial conditions on the integrator set by the position velocity signal during linear region operation (track mode). The fill-in signal serves to clamp the output of high pass filter 52 during recovery of the position ramp circuit 6B and during the peak portions of the position error signal 6A when nonlinearities occur. In this manner, the velocity signal is filled in an continuously updated by integration of the voice coil motor current during nonlinear position error signal regions, thus providing a continuous and accurate velocity signal from the position channel during linear and nonlinear position error signal regions.

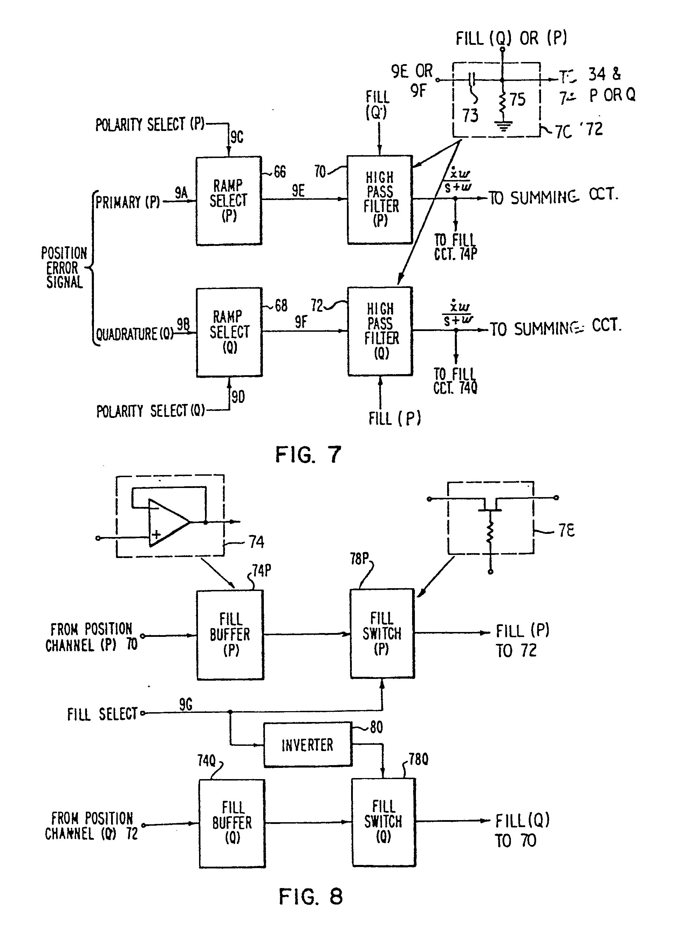

In an alternative embodiment of electronic tachometer circuit according to this invention, quadrature position error signals are used. This embodiment utilizes the basic elements of the tachometer circuit shown in Fig. 2 with modifications to the position channel 27 and to the track and fill circuit 32. The use of quadrature signals substantially reduces the deleterious effects of the position error signal nonlinearities on the position channel velocity signal. For this purpose, primary and quadrature channels are utilized in the position channel (Fig. 7). The primary position error signals 9A and quadrature position error signals 9B are applied respectively to ramp select circuits 66 and 68. Polarity select signals 9C and 9D respectively are also directed from a level detector (not shown) to the ramp select circuits 66 and 68. Position ramp signals 9E and 9F, which are generated by the primary and quadrature ramp select circuits, are processed by high pass filter circuits 70 and 72 that operate to generate position velocity signals, as discussed above in relation to filter 52. Each high pass filter circuit acts as a limited bandwidth differentiator and includes a charging capacitor 73 and resistor 75. The output signals from both high pass filters are connected to the summing circuit 34, which has an additional resistor to accommodate the second channel input signal.

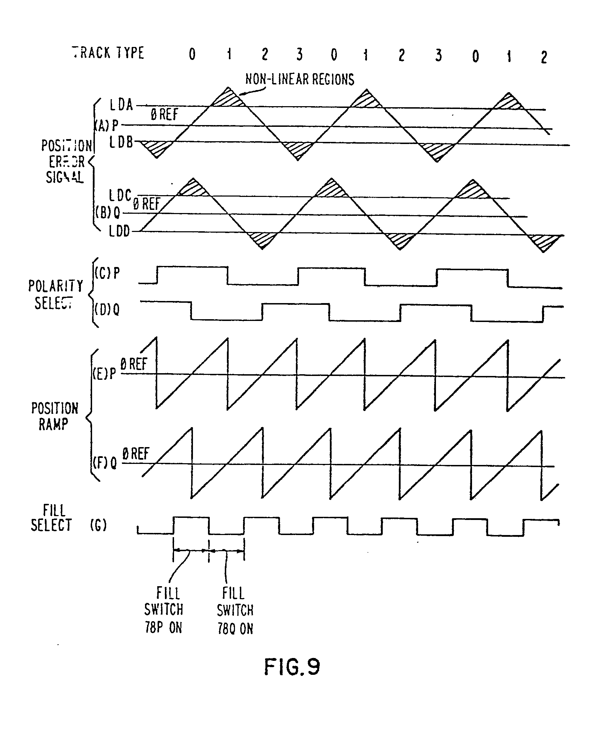

From the signals shown in Fig. 9, it will be observed that the non-linear regions of the primary and quadrature position error signals 9A and 9B, respectively, occur during linear regions of the quadrature and primary position error signals 9B and 9A, respectively. Considering the primary position error signal as the primary source of position velocity signals, fill in signals may be obtained using the quadrature position error signals. If the quadrature position error signal is considered as the main source of position velocity signals, fill in signals may be obtained using primary position error signals.

The fill select signals 9G from the level detector (not shown) are symmetrical and are used to provide controls to the track and fill circuit (Fig. 8).

When operating with quadrature position error signal, the velocity signal from the primary position channel high pass filter 70 is buffered by fill buffer 74P and appears at fill switch 78P. During the linear portion of primary position error signal 9A, the quadrature position error signal 9B is nonlinear and fill-in is required to maintain velocity signal accuracy. Fill-in is provided by fill buffer 74P through fill switch 78P to clamp the output of high pass filter 72Q to the correct signal output level. This fill-in continues until quadrature position error signal 9B returns to the linear region and the output from high pass filter 72Q is unclamped.

Following the fill interval for quadrature position error signal, the primary position error signal 9A reaches the extreme of its linear region and fill-select signal 9G reverses polarity. This opens the fill switch 78P and through inverter 80 closes fill switch 78Q. The quadrature position velocity output signal from filter 72 is buffered by fill buffer 74Q and appears at fill switch 78Q which is now energized. This signal effectively clamps the primary position velocity signal output from filter 70 to the correct signal level during the nonlinear region of the primary position error signal.

By alternating between primary and quadrature position signals and effectively clamping the appropriate nonlinear channel, a continuous accurate position channel velocity signal is obtained without use of current integration.

In summary, there has been described an electronic tachometer circuit, which employs the position error signal and voice coil motor current to generate a velocity signal, which is made to be continuously accurate over a broad range of velocities by means of a novel circuit including a low-bandwidth differentiator that provides fill-in of discontinuous nonlinear regions of the position error signal with continuous update. A rolloff of $-18db$/octave is realized to reduce resonant feedback effects and to enhance servo system stability without limiting velocity signal bandwidth. There has also been described a circuit using position error signals in quadrature, two differentiators and associated fill-in circuitry being used to provide a continuous signal proportional to velocity from the primary and quadrature position error channels respectively, thereby eliminating the need to estimate a linear position error signal between tracks.

## Claims

1. An electronic tachometer circuit for sensing velocity of a current driven actuator means, comprising a position error signal channel (28; 27) having means to derive position error signals having discontinuous portions, differentiating means (12; 70, 72) coupled to the position error signal deriving means to generate velocity signal components, means (32; 74, 78) to provide a fill-in signal during the discontinuous portions of the position error signals, and means to combine the velocity signal components from the position error signal channel with the fill-in signal, characterised in that the differentiating means is a low bandwidth differentiating means (12; 52; 70, 72) and that the fill-in signal is applied directly to the differentiating means (12; 52; 70, 72).

2. A circuit according to claim 1, in which the low bandwidth differentiating means comprises a high pass filter (12; 52; 70, 72) operating over a limited bandwidth.

3. A circuit according to claim 1 or 2, in which the fill-in signal is derived from a current signal channel (30, 29) having means to derive current signals from the actuator means and to generate velocity signal components for application to the differentiating means (12; 52).

4. A circuit according to claim 3, in which the means to provide a fill-in signal, comprises a track and fill circuit (32) having inputs coupled to the outputs of the current channel (30, 29) and of the position channel (28, 27) and an output coupled to the differentiating means (12, 52) of the position channel.

5. A circuit according to claim 4, in which the track and fill circuit comprises an integrator (60) coupled to the outputs of the position error signal channel (29) and of the current signal channel (27), and a switching means (62) connected between the channels and the integrator to switch the operation of the track and fill circuit (32) from a track mode when coupled to the position channel to a fill mode when coupled to the current channel.

6. A circuit according to claim 1, in which the position error signal channel includes a primary network (66, 70) and a quadrature network (68, 72) for processing primary and quadrature position error signals, signals derived from one of the networks being used to provide fill-in signals during discontinuous portions of signals derived from the other network (Fig. 7).

7. A circuit according to claim 6, in which the position error signal channel comprises first and second high pass filters (70, 72) for processing the primary and quadrature position error signals respectively.

8. A circuit according to claim 3, 4 or 5, including means (14, 34) to sum the combined signal from the position error signal channel (30, 29) with the velocity signal components from the current signal channel (28, 27).

9. A circuit according to claim 8, in which the current channel includes a first low pass filter (18, 46), and in which second and third low pass filters (20, 24; 36, 40) are coupled to the outputs of the position error signal channel and the current signal channel to increase the rolloff.

## Patentansprüche

1. Elektronische Tachometerschaltung für die Abfühlung der Geschwindigkeit eines stromgetriebenen Betätigungsmittels, enthaltend einen Positionsfehler-Signalkanal (28; 27) mit Mitteln zum Ableiten von Positionsfehlersignalen, die diskontinuierliche Teile aufweisen, Differentiationsmitteln (12; 70, 72), die mit den Positionsfehler-Signalableitungsmitteln verbunden sind, um Geschwindigkeitssignalkomponenten zu erzeugen Mittel (32; 74, 78) um Auffüllsignale für die diskontinuierlichen Teile der Positionsfehlersignale abzugeben, und Mittel zum Verbinden der Geschwindigkeitssignalkomponenten von dem Positionsfehler-Signalkanal mit dem Auffüllsignal, dadurch gekennzeichnet, daß die Differentiationsmittel (12; 52; 70, 72) solche mit niedriger Bandbreite sind und daß das Auffüllsignal direkt den Differentiationsmitteln (12; 52; 70, 72) zugeführt wird.

2. Schaltung nach Anspruch 1, bei der die Differentiationsmittel niedriger Bandbreite einen Hochpaßfilter (12; 52; 70, 72) enthalten, der über eine begrenzte Bandbreite arbeitet.

3. Schaltung nach Anspruch 1 oder 2, bei der das Auffüllsignal von einem Strom-Signalkanal (30, 29) abgeleitet ist, der Mittel zum Ableiten eines Stromsignals von dem Betätigungsmittel aufweist, und um Geschwindigkeitssignalkomponenten zu erzeugen, für Zuführung zu den Differentiationsmitteln (12; 52).

4. Schaltung nach Anspruch 3, bei der die Mittel zur Bereitstellung des Auffüllsignals einen Spur- und Auffüllschaltkreis (32) enthalten, deren Eingänge mit den Ausgängen des Stromkanals (30, 29) und des Positionskanals (28, 27) verbunden sind und einen Ausgang aufweisen, der mit den Differentiationsmitteln (12; 52) des Positionskanals verbunden ist.

5. Schaltung gemäß Anspruch 4, bei der die Spur- und Auffüllschaltung einen Integrator (60) enthält, der mit den Ausgängen des Positionsfehler-Signalkanals (29) und des Strom-Signalkanals (27) verbunden ist und Schaltmittel (62) zwischen den Kanälen und dem Integrator vorgesehen sind, um die Arbeitsweise der Spur- und Auffüllschaltung (32) von der Spurarbeitsweise, verbunden mit dem Positionskanal, in die Auffüll-Arbeitsweise, verbunden mit dem Stromkanal, umzuschalten.

6. Schaltung nach Anspruch 1, bei der der Positionsfehler-Signalkanal ein primäres Netzwerk (66, 70) enthält und ein quadratisches Netzwerk (68, 72) für die Verarbeitung der Positionsfehlersignale primärer und quadratischer Art, Signale, die von dem einen der Netzwerke abgeleitet werden, werden benutzt, um Auffüllsignale abzugeben während der diskontinuierlichen Teile der Signale, die vom anderen Netzwerk (Fig. 7) abgeleitet sind.

7. Schaltung gemäß Anspruch 6, bei der der Positionsfehler-Signalkanal ein erstes und zweites Hochpaßfilter (70, 72) enthält für die Bearbeitung des primären bzw. quadratischen Positionsfehlersignals.

8. Schaltung gemäß Anspruch 3, 4 oder 5, enthaltend Mittel (14, 34) zum Aufsummieren des kombinierten Signals vom Positionsfehler-Signalkanal (30, 29) mit den Geschwindigkeitssignalkomponenten vom Strom-Signalkanal (28, 27).

9. Schaltung gemäß Anspruch 8, bei der der Stromkanal ein erstes Tiefpaßfilter (18, 24) enthält, und bei der zweite und dritte Tiefpaßfilter (20, 24; 36, 40) mit den Ausgängen des Positionsfehler-Signalkanals und des Stromkanals verbunden sind, um den Frequenzabfall zu verstärken.

**Revendications**

1. Un circuit de tachymètre électronique pour détecter la vitesse d'un moyen d'actionnement excité par un courant comprenant un canal de signal d'erreur de position (28, 27) comportant des moyens pour dériver des signaux d'erreur de position présentant des parties discontinues, des moyens de différentiation (12, 70, 72) couplés aux moyens pour dériver des signaux d'erreur de position afin de générer des composants de signal de vitesse, des moyens (32, 74, 78) pour fournir un signal de remplissage pendant les parties discontinues des signaux d'erreur de position, et des moyens pour combiner les composants de signal de vitesse obtenus depuis le canal de signal d'erreur de position, avec le signal de remplissage, caractérisé en ce que les moyens de différenciation sont des moyens de différentiation à faible largeur de bande (12, 52, 70, 72) et en ce que le signal de remplissage est appliqué directement aux moyens de différentiation (12, 52, 70, 72).

2. Un circuit selon la revendication 1 dans lequel les moyens de différenciation à faible largeur de bande comprennent un filtre passe-haut (12, 52, 70, 72) fonctionnant sur une largeur de bande limitée.

3. Un circuit selon la revendication 1 ou 2, dans lequel le signal de remplissage est dérivé d'un canal de signal de courant (30, 29) comportant des moyens pour dériver des signaux de courant des moyens d'actionnement et pour générer des composants de signal de vitesse pour application aux moyens de différentiation (12, 52).

4. Un circuit selon la revendication 3, dans lequel les moyens pour fournir un signal de remplissage comprennent un circuit de poursuite et de remplissage (32) dont des entrées sont couplées aux sorties du canal de courant (30, 29) et du canal de position (28, 27) et dont une sortie est couplée aux moyens de différentiation (12, 52) du canal de position.

5. Un circuit selon la revendication 4, dans lequel le circuit de poursuite et de remplissage comprend un intégrateur (60) couplé aux sorties du canal de signal d'erreur de position (29) et du canal de signal de courant (27), et un moyen de commutation (62) connecté entre les canaux et l'intégrateur pour commuter le fonctionnement du circuit de poursuite et de remplissage (32) d'un mode poursuite lorsqu'il est couplé au canal de position, à un mode remplissage lorsqu'il est couplé au canal de courant.

6. Un circuit selon la revendication 1, dans lequel le canal de signal d'erreur de position comprend un réseau primaire (66, 70) et un réseau de quadrature (68, 72) pour traiter des signaux d'erreur de position principaux et en quadrature, des signaux dérivés de l'un des réseaux étant utilisés comme signaux der remplissage pendant des parties discontinues des signaux dérivés de l'autre réseau (figure 7).

7. Un circuit selon la revendication 6, dans lequel le canal de signal d'erreur de position comprend des premier et second filtres passe-hauts (70, 72) pour traiter les signaux d'erreur de position principaux et en quadrature, respectivement.

8. Un circuit selon la revendication 3, 4 ou 5, comprenant des moyens (14, 34) pour faire la somme du signal combiné à partir du canal de signal d'erreur de position (30, 29) et des composants de signal de vitesse à partir du canal de signal de courant (28, 27).

9. Un circuit selon la revendication 8, dans lequel le canal de courant comprend un premier filtre passe bas (18, 46) et dans lequel des deuxième et troisième filtres passe-bas (20, 24, 36, 40) sont couplés aux sorties du canal de signal d'erreur de position et du canal de signal de courant pour augmenter l'élimination.

FIG. 1

0 009 663

FIG. 2

0 009 663

TO 38 → BUFFERED CURRENT SIGNAL

VCM CURRENT SIG. → BUFFER

44

LOW PASS FILTER    46    TO 34 & 32 → CURRENT REF. SIG.

INVERTER    48    TO 34 → INVERTED CURRENT SIGNAL

29

## FIG. 3

FROM 32

6B    $C_F$    $R_F$    TO 34 & 58

52

FROM 42 ○ 6C

FROM 32

52

POSITION ERROR SIG. ○ 6A → RAMP SELECT    50    6B → HIGH PASS FILTER    52    TO SUMMING CCT. 34

$$\frac{\dot{x}\,w}{s+w}$$

→ TO COMPARATOR

27

## FIG. 4

FIG. 5

FIG. 6

4

FIG. 7

FIG. 8

FIG.9